# EUROPEAN PATENT APPLICATION

(11) **EP 4 748 785 A1**
(43) Date of publication of application: **27.05.2026**
(21) Application number: 24214337.8
(22) Date of filing: 20.11.2024
(51) Int. Cl.: C01B 3/36

(54) **PROCESS AND PLANT FOR THE PRODUCTION OF A RAW SYNTHESIS GAS OR HYDROGEN**

(71) Applicant: CASALE SA, 6900 Lugano (CH)
(72) Inventor: MOREO, Pietro, 6900 Lugano (CH); GENOVA, Giovanni, 22100 Como (IT)
(74) Representative: M. Zardi & Co S.A.

(57) **Abstract**

The present invention relates to a process or plant (1) for the production of a raw synthesis gas (10) or of a hydrogen-containing product (20).

Said process comprises the following steps: (I) provision of a hydrocarbon feedstock (2) comprising one or more heavy hydrocarbon(s) in an overall amount comprised from 5% to 70% molar; said one or more heavy hydrocarbon(s) being aliphatic and/or aromatic hydrocarbon(s), or mixtures of aliphatic and/or aromatic hydrocarbons, having a number of carbon atoms comprised from 2 to 30; (II) optional pre-treatment (41) of said hydrocarbon feedstock (2) by hydrogenation of any unsaturated heavy hydrocarbon(s) and/or by purification of any catalyst poison contained in said hydrocarbon feedstock (2) to obtain a pre-treated hydrocarbon feedstock (45); (III) adjustment of a steam to carbon (S/C) ratio of said hydrocarbon feedstock (2) of step (I) to a S/C ratio comprised from 1 to 3 to obtain a steam-adjusted feedstock (4); (IV) pre-reforming of the steam-adjusted feedstock (4) of step (II) to obtain a pre-reformed stream (6, 6', 6") containing methane produced by reforming of said heavy hydrocarbon(s); (V) adjustment of a steam to carbon (S/C) ratio of said pre-reformed stream (6, 6', 6") of step (III) to below 1 to obtain a steam-adjusted stream (7); (VI) partial oxidation (POx) of the steam-adjusted stream (7) of step (IV) in presence of pure oxygen or oxygen-enriched air (22) to obtain said raw synthesis gas (10); (VII) optionally posttreatment (11, 12) and purification (13) of the raw synthesis gas (10) of step (VI) to obtain said hydrogen-containing product (20).

## Description

### Field of the invention

The present invention broadly relates to synthesis gas ("syngas") production that can be used - as mere examples - for hydrogen, ammonia, methanol, Fischer-Tropsch synthesis, or as oxo syngas for carbonylation or hydroformylation synthesis.

### Prior art

Reforming processes have been long been studied for converting natural gas into a syngas comprising hydrogen and carbon monoxide as its main components. Reforming is broadly industrially applied for obtaining hydrogen, ammonia, and methanol.

An increased interest for syngas production with low carbon emissions has turned on the spotlight on reforming processes based on partial oxidation (POx) for processing not only natural gas, but also other heavier hydrocarbon feedstocks. A partial oxidation process is performed in presence of under-stoichiometric amounts of oxygen that would be needed for a complete oxidation of the hydrocarbon feedstock to carbon dioxide.

However, partial oxidation performed on heavier hydrocarbon feedstocks traditionally leads to operational issues, mainly due to formation of polycyclic aromatic compounds generating soot during combustion. Soot generation requires to perform frequent periodic maintenance interventions in downstream apparatuses that, in the end, reduce productivity and profitability of the overall process.

The Applicant, after long and intensive research and development, has developed a process and plant that provide an adequate response to the existing limitations, drawbacks, and problems.

### Summary of the invention

The purpose of the invention is to solve the aforementioned drawbacks of the known art.

In particular, the authors of the present invention have found that soot formation is surprisingly reduced or suppressed by a combination of a pre-reforming performed on heavier hydrocarbon feedstocks followed by a partial oxidation (POx), in presence of specific and controlled steam-to-carbon (S/C) conditions.

The above aims are achieved by a process for the production of a raw synthesis gas or of a hydrogen-containing product comprising the following steps:
(I) provision of a hydrocarbon feedstock comprising one or more heavy hydrocarbon(s) in an overall amount comprised from 5% to 70% molar; said one or more heavy hydrocarbon(s) being aliphatic and/or aromatic hydrocarbon(s), or mixtures of aliphatic and/or aromatic hydrocarbons, having a number of carbon atoms comprised from 2 to 30;
(II) optional pre-treatment of said hydrocarbon feedstock by hydrogenation of any unsaturated heavy hydrocarbon(s) and/or by purification of any catalyst poison contained in said hydrocarbon feedstock to obtain a pre-treated hydrocarbon feedstock (45);
(III) adjustment of a steam to carbon (S/C) ratio of said hydrocarbon feedstock of step (I) or pre-treated hydrocarbon feedstock of step (II) to a S/C ratio comprised from 1 to 3 to obtain a steam-adjusted feedstock;
(IV) pre-reforming of the steam-adjusted feedstock of step (III) to obtain a pre-reformed stream containing methane produced by reforming of said heavy hydrocarbon(s);
(V) adjustment of a steam to carbon (S/C) ratio of said pre-reformed stream of step (IV) to below 1 to obtain a steam-adjusted stream;
(VI) partial oxidation (POx) of the steam-adjusted stream of step (V) in presence of pure oxygen or oxygen-enriched air to obtain said raw synthesis gas;
(VII) optionally post-treatment of the raw synthesis gas of step (VI) to obtain said hydrogen-containing product.

Furthermore, the above aims are achieved also by a plant for the production of a raw synthesis gas or of a hydrogen-containing product, said plant comprising:
(I) a hydrocarbon feedstock feed line for feeding a hydrocarbon feedstock comprising one or more heavy hydrocarbon(s);
(II) an optional pre-treatment section of said hydrocarbon feedstock, said pre-treatment section comprising a hydrogenation unit of any unsaturated heavy hydrocarbon(s) and/or a purification unit of any catalyst poison contained in said hydrocarbon feedstock to obtain a pre-treated hydrocarbon feedstock;
(III) a steam line arranged for mixing steam to the hydrocarbon feedstock or to the pre-treated hydrocarbon feedstock, and hence for adjusting a steam to carbon (S/C) ratio of said hydrocarbon feedstock or of said pre-treated hydrocarbon feedstock, thereby obtaining a steam-adjusted feedstock;
(IV) a pre-reforming reactor of the steam-adjusted feedstock to obtain a pre-reformed stream containing methane produced by reforming of said heavy hydrocarbon(s);
(V) a de-saturator column or a cooler-separator device of said pre-reformed stream arranged for adjusting a steam to carbon (S/C) ratio of said pre-reformed stream and thereby obtaining a steam-adjusted stream;
(VI) a partial oxidation (POx) reactor arranged for partially oxidizing the steam-adjusted stream in presence of pure oxygen or oxygen-enriched air to obtain said raw synthesis gas;
(VII) optionally a post-treatment section of the raw synthesis gas arranged for post-treating said raw synthesis gas to obtain said hydrogen-containing product.

### Advantageous effects of the invention

The invention has the following advantages.

Advantageously, the reactions that take place during pre-reforming in the process and plant of the present invention - these reactions being a decomposition of the heavy hydrocarbon(s) (exothermic), steam reforming (endothermic) and water gas shift (exothermic) - have a global exothermic balance, so that they produce a hot effluent whose thermal content can be exploited in other steps or units of the process or plant.

Advantageously, the process and plant of the present invention can avoid installing one or more fired heater(s), e.g., for pre-heating the feedstock. This produces a benefit in terms of reduced carbon emissions associated with such fired heater(s).

Advantageously, the process and plant of the present invention leads to obtain a hydrogen-containing product from a high-carbon raw synthesis gas thanks to a post-treatment section of the raw synthesis gas.

Advantageously, said post-treatment section can designed in many configurations for obtaining high-purity hydrogen or syngas with desired compositions.

Advantageously, the process and plant of the present invention allow to obtain a syngas that can be used for subsequent methanol or ammonia synthesis, Fischer-Tropsch (gas to liquid) synthesis process, carbonylation or hydroformylation ("oxo") synthesis processes, monoethylene glycol ("MEG") synthesis processes, e.g. by virtue of the required concentrations of its components (such as carbon monoxide, carbon dioxide and hydrogen).

### Preferred embodiments

In the present description the expression "petroleum" means fossil petroleum, synthetic petroleum, and their mixtures. "Synthetic petroleum" is obtained by a chemical synthesis process, e.g., by a Fischer-Tropsch synthesis process.

According to an embodiment, the overall amount of said one or more heavy hydrocarbon(s) is comprised from 10% to 50% molar.

Preferably, said heavy hydrocarbon(s) has/have a number of carbon atoms comprised from 2 to 25.

More preferably, said aliphatic and/or aromatic hydrocarbons are selected from any of (a) to (e):
(a) one or more hydrocarbon(s) having a number of carbon atoms comprised from 2 to 9;
(b) one or more hydrocarbon(s) having a number of carbon atoms comprised from 5 to 12, preferably obtained by fractional distillation of petroleum at atmospheric pressure and at a temperature comprised from 30 °C to 200 °C, more preferably obtained by fractional distillation of petroleum at atmospheric pressure and at a temperature comprised from 30 °C to 90 °C and having a number of carbon atoms comprised from 5 to 6, e.g., light naphtha, and/or obtained by fractional distillation of petroleum at atmospheric pressure and at a temperature comprised from 90 °C to 200 °C and having a number of carbon atoms comprised from 6 to 12, e.g., heavy naphtha;
(c) one or more hydrocarbon(s) having a number of carbon atoms comprised from 10 to 16, preferably obtained by fractional distillation of petroleum at atmospheric pressure and at a temperature comprised from 150 °C to 275 °C, more preferably kerosene;
(d) one or more hydrocarbon(s) having a number of carbon atoms comprised from 9 to 25, preferably obtained by fractional distillation of petroleum at atmospheric pressure and at a temperature comprised from 200 °C to 350 °C, more preferably diesel; and
(e) mixtures of two or more of (a)-(d).

Optional step (II) may be used for at least partially (e.g. substantially completely) removing any unsaturated heavy hydrocarbons by hydrogenation of unsaturated hydrocarbons, and/or for at least partially (e.g. substantially completely) purifying the hydrocarbon feedstock from catalyst poison(s) for catalysts that may be used in downstream steps or units of the present process and plant.

As mere examples, catalyst poison(s) may be selected from the group consisting of sulphur, chloride, mercury, and any mixtures thereof.

According to an embodiment, adjustment of step (III) is performed by adding steam 3 to said hydrocarbon feedstock 2 to obtain the steam-adjusted feedstock 4 with said S/C ratio.

According to another embodiment, said S/C ratio of step (III) is comprised from 1.5 to 3.0, preferably from 2.0 to 2.7.

According to a preferred embodiment, at least 90%, preferably at least 95%, more preferably at least 98%, even more preferably 100%, of said pre-reformed stream 6, 6', 6" of step (IV) is fed to step (V).

Pre-reforming of step (IV) comprises or consists of an adiabatic pre-reforming.

According to a preferred embodiment, a temperature of said pre-reformed stream 6 of step (IV) is higher than a temperature of said hydrocarbon feedstock 2 of step (I), and/or of said pre-treated hydrocarbon feedstock 45 of step (II), and/or of the steam-adjusted feedstock 4 of step (III).

Said temperature of the pre-reformed stream 6 may be comprised from 480 °C to 580 °C.

According to an advantageous embodiment, said process further comprises - before step (IV) - a step of pre-heating 8, 16 of the hydrocarbon feedstock 2 of step (I) or the pre-treated hydrocarbon feedstock 45 of step (II) or the steam-adjusted feedstock 4 of step (III).

Said step of pre-heating may be performed with an electrically powered heater 16, such as a start-up heater 16.

Preferably, said step of pre-heating 8 comprises an indirect heat-exchange between said hydrocarbon feedstock 2 or pre-treated hydrocarbon feedstock 45 or steam-adjusted feedstock 4 and said pre-reformed stream 6.

A pre-heating temperature of the hydrocarbon feedstock 2 or of the pre-treated hydrocarbon feedstock 45 or of the steam-adjusted feedstock 4 may be comprised from 420 °C to 490 °C.

According to an embodiment, adjustment of step (V) is performed by removing a condensed aqueous phase 28 from said pre-reformed stream 6, 6', 6" to obtain said steam-adjusted stream 7 with said S/C ratio, optionally after at least one or at least two cooling steps of said pre-reformed stream.

According to another embodiment, said S/C ratio of step (V) is comprised from 0.2 to 0.99, preferably comprised from 0.4 to 0.98.

Partial oxidation may be catalytic or non-catalytic, preferably non-catalytic.

Partial oxidation is preferably carried out at an operating pressure comprised from 15 bar gauge (barg) to 55 barg.

The process may comprise - after step (V) - a step of recovery of at least part of the heat from raw synthesis gas 10.

The process may further comprise - after step (V) and eventually after heat recovery - to wash the raw synthesis gas 10.

Preferably, the process further comprises - before step (V) - a step of pre-heating 9 of the steam-adjusted stream 7 of step (IV).

Said step of pre-heating 9 preferably comprises an indirect heat-exchange between said steam-adjusted stream 7 and said pre-reformed stream 6'.

A pre-heating temperature of the steam-adjusted stream 7 may be comprised from 100 °C to 450 °C.

According to an embodiment, step (VII) comprises one or more of the following: a water gas shift conversion step (11), and/or a carbon dioxide removal step (12), and/or a hydrogen purification step (13).

According to another embodiment, step (VII) comprises - in sequence:
- a water gas shift conversion step 11, a carbon dioxide removal step 12, and a hydrogen purification step 13; or
- a water gas shift conversion step 11 and a hydrogen purification step 13.

Preferably, said hydrogen purification step 13 comprises steps of pressure swing adsorption. More preferably, said hydrogen purification step comprises a pressure swing adsorption step and a cryogenic carbon dioxide (CO₂) separation step.

According to an embodiment, said hydrogen-containing product 20 has a high-purity of more than 95%, preferably of more than 99%, more preferably of more than 99.9%, even more preferably of more than 99.999%.

According to another embodiment, said hydrogen-containing product 20 comprises a hydrogen (H₂) to carbon monoxide (CO) molar ratio - H₂/CO ratio - substantially comprised from 1 and 2.

According to still another embodiment, said process further comprises feeding of said hydrogen-containing product 20 to an ammonia or methanol synthesis section, to a Fischer-Tropsch synthesis reactor, to a carbonylation or hydroformylation synthesis reactor, or to a monoethylene glycol synthesis processes. According to different embodiments, the monoethylene glycol synthesis process may performed by hydroformylation or by carbonylation and subsequent hydrogenation.

Preferably, said plant 1 is configured for implementing the process according to any of the embodiments disclosed in the present description. Hence, process features correspond - *mutatis mutandis* - to plant features, and vice versa, even if not expressly specified.

According to an embodiment, said de-saturator column 14 or said cooler-separator device 23, 24 is arranged for receiving at least 90%, preferably at least 95%, more preferably at least 98%, even more preferably 100%, of said pre-reformed stream 6, 6', 6".

Preferably, the plant further comprises a feed-effluent (F-E) heat exchanger 8 arranged for pre-heating the hydrocarbon feedstock 2, or the pre-treated hydrocarbon feedstock 45, or the steam-adjusted feedstock 4 by indirect heat-exchange with said pre-reformed stream 6.

The plant may further comprise an indirect heat exchanger 9 arranged for pre-heating the steam-adjusted stream 7 by indirect heat-exchange with said pre-reformed stream 6'.

More preferably, said F-E heat exchanger 8 and/or said indirect heat exchanger 9 is or comprises a plate-and-frame F-E heat exchanger.

According to an embodiment, the plant further comprises a start-up heater 16 of the steam-adjusted feedstock 4 arranged upstream of the pre-reforming reactor 5.

Preferably, the start-up heater 16 is electrically powered.

According to a possible embodiment, the plant comprises a saturator column 17 wherein an aqueous phase is contacted with the hydrocarbon feedstock 2 for producing a water-saturated hydrocarbon feedstock 21, and further comprises a line for feeding an aqueous liquid to the de-saturator column 14, so that the aqueous liquid is contacted with the pre-reformed stream 6" in the de-saturator column 14 for producing said steam-adjusted stream 7.

Said saturator column 17 may be fluidically independent from said de-saturator column 14. Expressed in other terms, said aqueous phase is not recovered from the de-saturator column 14 and said aqueous liquid is not recovered from the saturator column 17. Preferably, said saturator column 17 may be thermally independent from said de-saturator column 14. Expressed in an alternative manner, said saturator column 17 and said de-saturator column 14 are not in a heat-exchanging relationship with each other.

According to a preferred embodiment, the plant further comprises a saturator column 17 fluidically connected to said de-saturator column 14 so that:
- at least part 18 of a condensed aqueous phase 28 recovered from the de-saturator column 14 is contacted with the hydrocarbon feedstock 2 within said saturator column 17 for producing a water-saturated hydrocarbon feedstock 21; and/or
- at least part 25 (e.g., all) of a saturator bottom liquid 39 recovered from the saturator column 17 is contacted with the pre-reformed stream 6" within said de-saturator column 14 for producing said steam-adjusted stream 7.

Preferably, the steam line is arranged for mixing steam 3 to said water-saturated hydrocarbon feedstock 21 before pre-reforming 5.

According to another embodiment, the plant further comprises an indirect heat exchanger 26 arranged for pre-heating said part 18 of the condensed aqueous phase 28 recovered from the de-saturator column 14 by indirect heat-exchange with said pre-reformed stream 6'.

According to another embodiment of the fluidically, and preferably thermally, independent saturator column 17, the plant may further comprise an indirect heat exchanger arranged for pre-heating said aqueous phase by indirect heat-exchange with said pre-reformed stream 6' or with another (e.g. external) heating medium.

According to still another embodiment, said post-treatment section 11, 12, 13 comprises any of a water gas shift conversion unit 11, and/or a carbon dioxide removal unit 12, and/or a hydrogen purification section 13.

Preferably, said post-treatment section 11, 12, 13 comprises, in sequence:
- a water gas shift conversion unit 11, a carbon dioxide removal unit 12, and a hydrogen purification section 13; or
- a water gas shift conversion unit 11 and a hydrogen purification section 13, said hydrogen purification section preferably comprising a pressure swing adsorption unit and a cryogenic carbon dioxide (CO₂) separation unit.

The advantages of the invention will be even more evident from the following detailed description made on the basis of the enclosed figures, which are provided as a non-limiting example.

### Description of the figures

Fig. 1: process according to a first embodiment of the present invention;
Fig. 2: process according to a second embodiment of the present invention;
Fig. 3: process according to a third embodiment of the present invention.

### Detailed description of the invention according to preferred embodiments

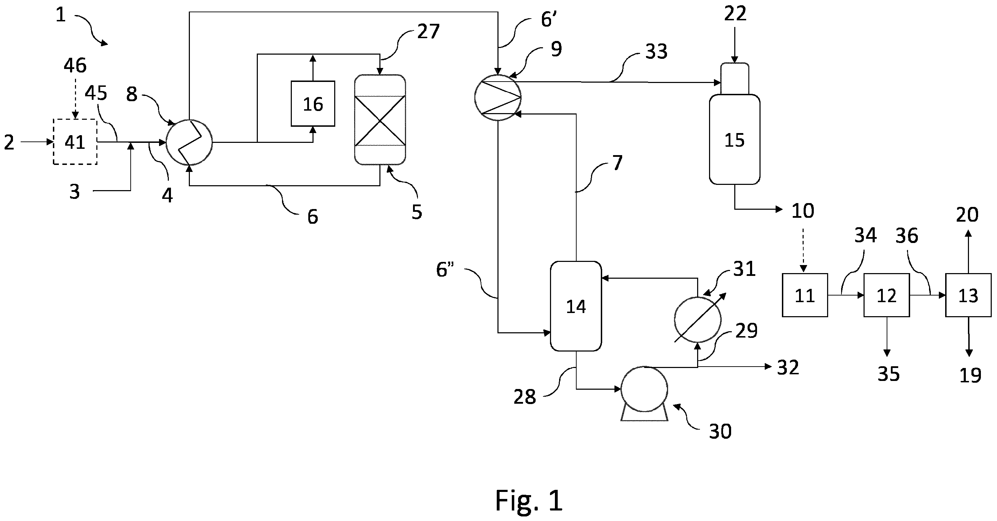

Fig. 1 shows a first embodiment of the process and plant for the production of a raw synthesis gas 10 or of a hydrogen-containing product 20.

In a step (I), a hydrocarbon feedstock 2 comprising one or more heavy hydrocarbon(s) - as defined by the present description - is provided.

If the hydrocarbon feedstock 2 comprises unsaturated heavy hydrocarbon(s) and/or one or more catalyst poison(s), the hydrocarbon feedstock 2 may be passed through a pre-treatment section 41 - step (II) - wherein the unsaturated heavy hydrocarbon(s) are hydrogenated (to become saturated) and/or said hydrocarbon feedstock 2 is purified from said catalyst poison(s) thus obtain a pre-treated hydrocarbon feedstock 45. A stream of hydrogen 46 is also fed to the pre-treatment section 41 when a hydrogenation unit is necessary.

Steam 3 is added to said hydrocarbon feedstock 2 or pre-treated hydrocarbon feedstock 45 for adjusting - step (III) - a steam to carbon (S/C) ratio of said hydrocarbon feedstock 2 to a S/C value comprised from 1 to 3 to obtain a steam-adjusted feedstock 4.

The steam-adjusted feedstock 4 is pre-heated in a feed-effluent (F-E) heat exchanger 8 - wherein it exchanges heat with a pre-reformed stream 6 - to obtain a pre-heated feedstock 27.

During start-up, when heat from the F-E heat exchanger 8 is absent or insufficient for increasing the temperature of the steam-adjusted feedstock 4, this latter may be passed through a start-up heater 16 - arranged before pre-reforming 5 is performed - to obtain the pre-heated feedstock 27.

The pre-heated feedstock 27 is pre-reformed - step (IV) - to obtain a pre-reformed stream 6 containing - among others - methane produced by reforming (or pre-reforming) of said heavy hydrocarbon(s). Such pre-reformed stream 6 may further contain steam, carbon monoxide, carbon dioxide, and hydrogen in variable amounts. The balance of such (pre-)reforming is exothermic, so that a temperature of said pre-reformed stream 6 is higher than a temperature of said hydrocarbon feedstock 2, of said pre-treated hydrocarbon feedstock 45, and of said steam-adjusted feedstock 4.

Afterwards, the pre-reformed stream 6 may exchange heat with the steam-adjusted feedstock 4 in the F-E heat exchanger 8, thereby cooling down to give a first cooled pre-reformed stream 6'.

The first cooled pre-reformed stream 6' may be further cooled in an indirect heat exchanger 9, wherein it exchanges heat with a steam-adjusted stream 7 to give a second cooled pre-reformed stream 6" whose temperature is a few degrees above a dew point of steam therein contained.

In a subsequent step (V), a steam to carbon (S/C) ratio of said second cooled pre-reformed stream 6" is adjusted to below 1 to obtain a steam-adjusted stream 7.

From the present description it is clear that the adjustment of step (III) involves adding (e.g., mixing) steam 3 to the hydrocarbon feedstock 2. In contrast thereto, the adjustment of step (V) involves a removal of a condensed aqueous phase 28.

In the embodiment of Fig. 1 step (V) is performed with a de-saturator column 14 receiving the second cooled pre-reformed stream 6" and providing the steam-adjusted stream 7 as a head stream and the condensed aqueous phase 28 as a bottom liquid.

At least part 29 of such condensed aqueous phase 28 may be recirculated to the de-saturator column 14 by means of a first circulation pump 30 and a condensate cooler 31. Any other part 32 of the condensed aqueous phase 28 may be exported.

The steam-adjusted stream 7 may be pre-heated in the indirect heat exchanger 9 by heat exchange with the first cooled pre-reformed stream 6', thereby providing a pre-heated steam-adjusted stream 33, before partial oxidation - step (VI).

In step (VI), the steam-adjusted stream 7 or pre-heated steam-adjusted stream 33 is subjected to partial oxidation (POx) 15 in presence of pure oxygen or oxygen-enriched air 22 to obtain said raw synthesis gas 10.

Optionally, the raw synthesis gas 10 may be subjected to post-treatment 11, 12, 13 - step (VII) - to obtain said hydrogen-containing product 20.

The post-treatment comprises a water gas shift conversion step 11 to obtain a shifted gas 34, and a carbon dioxide removal step 12 from said shifted gas 34 thereby obtaining a carbon dioxide (CO₂) stream 35 and a CO₂-depleted stream 36. A last step of the post-treatment 13 comprising a purification of the CO₂-depleted stream 36, e.g. performed by pressure swing adsorption (PSA), provides said hydrogen-containing product 20 and a tail stream 19.

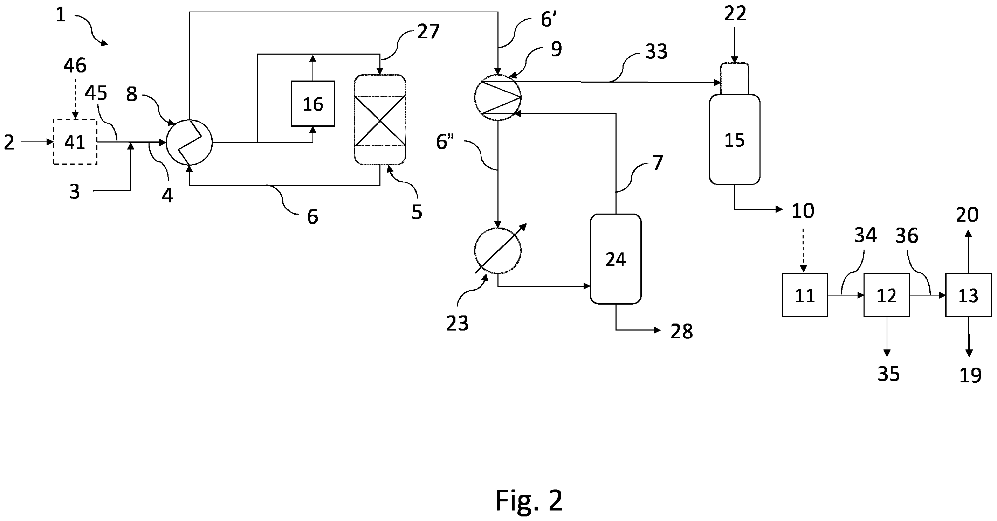

Fig. 2 shows a second embodiment of the present process and plant.

As a difference with respect to the embodiment of Fig. 1, the second cooled pre-reformed stream 6" is passed through a cooler 23 to be cooled below the dew point of steam therein contained, necessary to remove an excess of steam, and then fed to a liquid-gas separator 24 for carrying out the adjustment of the steam to carbon (S/C) ratio according to step (V).

The liquid-gas separator 24 provides the steam-adjusted stream 7 as a head stream and the condensed aqueous phase 28 as a bottom liquid. This latter can be exported.

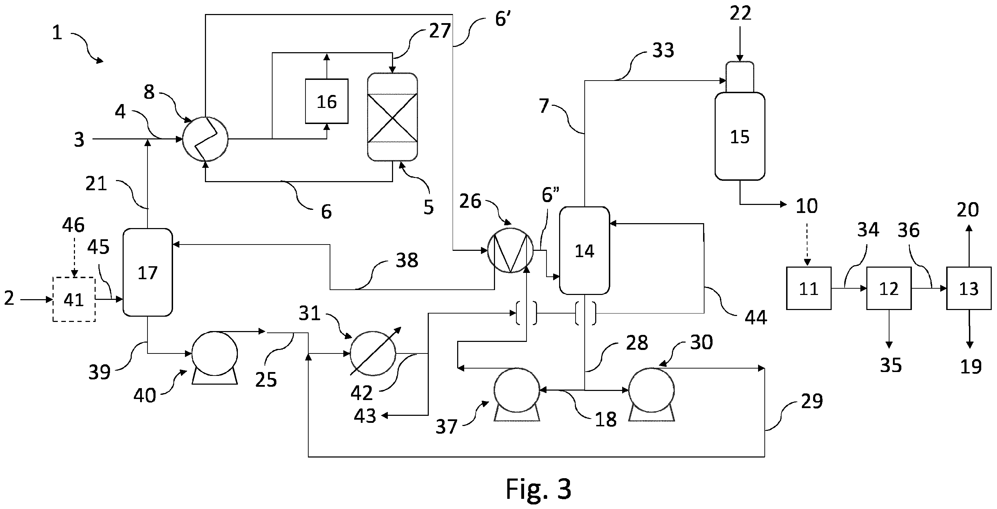

Fig. 3 shows a third embodiment of the present process and plant.

As a difference with respect to the embodiment of Fig. 1, the first cooled pre-reformed stream 6' may passed through an indirect heat exchanger 26 arranged for cooling the first cooled pre-reformed stream 6' to become the second cooled pre-reformed stream 6" by indirect heat-exchange with part 18 of the condensed aqueous phase 28 recovered from the de-saturator column 14.

More precisely, the condensed aqueous phase 28 coming from the de-saturator column 14 is split into two parts 18, 29: one part 29 may be recirculated to the de-saturator column 14 by means of the first circulation pump 30 and the condensate cooler 31. One other part 18 is displaced with a pump 37 through the indirect heat exchanger 26 to become a pre-heated stream 38 fed to a saturator column 17.

The hydrocarbon feedstock 2 is supplied to the saturator column 17 after passing through the optional pre-treatment section 41 discussed previously with reference to Fig. 1.

In the saturator column 17, the hydrocarbon feedstock 2 or the pre-treated hydrocarbon feedstock 45 is contacted with said pre-heated stream 38 to produce a water-saturated hydrocarbon feedstock 21 that leaves such saturator column 17 overhead. The steam line is arranged for mixing steam 3 to said water-saturated hydrocarbon feedstock 21 before pre-reforming 5.

A saturator bottom liquid 39 is drawn from the saturator column 17 by means of a pump 40, leaves such pump as stream 25 that is then mixed with said part 29 of condensed phase 28 before entering the condensate cooler 31 to obtain a cooled mixed stream 42.

A first portion 43 of the cooled mixed stream 42 is exported. A second portion 44 of the cooled mixed stream 42 is fed to the de-saturator column 14 and contacted with the second cooled pre-reformed stream 6" for producing the steam-adjusted stream 7.

Even if not specified above, a person skilled in the art may envisage, using the expertise typical of this technological field, varying, or replacing some of the above features with other technically equivalent elements.

These variations or replacements also fall within the scope defined by the following claims.

Furthermore, each alternative illustrated in connection with a particular embodiment can be realised independently of the other embodiments here described.

### LIST OF THE REFERENCE SIGNS

- 1: process or plant
- 2: hydrocarbon feedstock
- 3: steam
- 4: steam-adjusted feedstock
- 5: pre-reforming step or reactor
- 6: pre-reformed stream
- 6': pre-reformed stream, preferably first cooled pre-reformed stream
- 6": pre-reformed stream, preferably second cooled pre-reformed stream
- 7: steam-adjusted stream
- 8: pre-heating or pre-heater, preferably feed-effluent (F-E) heat exchanger
- 9: pre-heating or pre-heater, preferably indirect heat exchanger
- 10: raw synthesis gas (raw syngas)
- 11: post-treatment step or section, preferably water gas shift conversion step or unit
- 12: post-treatment step or section, preferably carbon dioxide removal step or unit
- 13: purification step or section, preferably pressure swing adsorption step or unit
- 14: de-saturator column
- 15: partial oxidation (POx) step or reactor
- 16: start-up heater
- 17: saturator column
- 18: part of condensed aqueous phase
- 19: tail stream
- 20: hydrogen-containing product
- 21: water-saturated hydrocarbon feedstock
- 22: pure oxygen or oxygen-enriched air
- 23, 24: cooler and liquid-gas separator (cooler-separator device)
- 25: stream
- 26: indirect heat exchanger
- 27: pre-heated feedstock
- 28: condensed aqueous phase
- 29: part of the condensed phase
- 30: first circulation pump
- 31: condensate cooler
- 32: other part of the condensed phase
- 33: pre-heated steam-adjusted stream
- 34: shifted gas
- 35: carbon dioxide (CO₂) stream
- 36: CO₂-depleted stream
- 37: pump
- 38: pre-heated stream
- 39: saturator bottom liquid
- 40: pump
- 41: pre-treatment step or section, preferably hydrogenation step or unit and/or purification step or unit
- 42: cooled mixed stream
- 43: first portion of the cooled mixed stream
- 44: second portion of the cooled mixed stream
- 45: pre-treated hydrocarbon feedstock
- 46: stream of hydrogen

## Claims

1. A process (1) for the production of a raw synthesis gas (10) or of a hydrogen-containing product (20) comprising the following steps:
(I) provision of a hydrocarbon feedstock (2) comprising one or more heavy hydrocarbon(s) in an overall amount comprised from 5% to 70% molar, e.g. from 10% to 50% molar; said one or more heavy hydrocarbon(s) being aliphatic and/or aromatic hydrocarbon(s), or mixtures of aliphatic and/or aromatic hydrocarbons, having a number of carbon atoms comprised from 2 to 30, preferably from 2 to 25;
(II) optional pre-treatment (41) of said hydrocarbon feedstock (2) by hydrogenation of any unsaturated heavy hydrocarbon(s) and/or by purification of any catalyst poison contained in said hydrocarbon feedstock (2) to obtain a pre-treated hydrocarbon feedstock (45);
(III) adjustment of a steam to carbon (S/C) ratio of said hydrocarbon feedstock (2) of step (I) or pre-treated hydrocarbon feedstock (45) of step (II) to a S/C ratio comprised from 1 to 3 to obtain a steam-adjusted feedstock (4);
(IV) pre-reforming of the steam-adjusted feedstock (4) of step (III) to obtain a pre-reformed stream (6, 6', 6") containing methane produced by reforming of said heavy hydrocarbon(s);
(V) adjustment of a steam to carbon (S/C) ratio of said pre-reformed stream (6, 6', 6") of step (IV) to below 1 to obtain a steam-adjusted stream (7);
(VI) partial oxidation (POx) of the steam-adjusted stream (7) of step (V) in presence of pure oxygen or oxygen-enriched air (22) to obtain said raw synthesis gas (10);
(VII) optionally post-treatment (11, 12, 13) of the raw synthesis gas (10) of step (VI) to obtain said hydrogen-containing product (20).

2. The process according the previous claim, wherein said aliphatic and/or aromatic hydrocarbons are selected from:
(a) one or more hydrocarbon(s) having a number of carbon atoms comprised from 2 to 9;
(b) one or more hydrocarbon(s) having a number of carbon atoms comprised from 5 to 12, preferably obtained by fractional distillation of petroleum at atmospheric pressure and at a temperature comprised from 30 °C to 200 °C, more preferably obtained by fractional distillation of petroleum at atmospheric pressure and at a temperature comprised from 30 °C to 90 °C and having a number of carbon atoms comprised from 5 to 6, e.g., light naphtha, and/or obtained by fractional distillation of petroleum at atmospheric pressure and at a temperature comprised from 90 °C to 200 °C and having a number of carbon atoms comprised from 6 to 12, e.g., heavy naphtha;
(c) one or more hydrocarbon(s) having a number of carbon atoms comprised from 10 to 16, preferably obtained by fractional distillation of petroleum at atmospheric pressure and at a temperature comprised from 150 °C to 275 °C, more preferably kerosene;
(d) one or more hydrocarbon(s) having a number of carbon atoms comprised from 9 to 25, preferably obtained by fractional distillation of petroleum at atmospheric pressure and at a temperature comprised from 200 °C to 350 °C, more preferably diesel; and
(e) mixtures of two or more of (a)-(d).

3. The process according to any of the previous claims, wherein:
- said S/C ratio of step (III) is comprised from 1.5 to 3.0, preferably from 2.0 to 2.7; and/or
- said S/C ratio of step (V) is comprised from 0.2 to 0.99, preferably comprised from 0.4 to 0.98.

4. The process according to any of the previous claims, wherein at least 90%, preferably at least 95%, more preferably at least 98%, even more preferably 100%, of said pre-reformed stream (6, 6', 6") of step (IV) is fed to step (V).

5. The process according to any of the previous claims, wherein a temperature of said pre-reformed stream (6, 6', 6") of step (IV) is higher than a temperature of said hydrocarbon feedstock (2) of step (I), and/or of said pre-treated hydrocarbon feedstock (45) of step (II), and/or of the steam-adjusted feedstock (4) of step (III), preferably said temperature of the pre-reformed stream (6, 6', 6") being comprised from 480 °C to 580 °C.

6. The process according to any of the previous claims, further comprising - before step (IV) - a step of pre-heating (8) of the hydrocarbon feedstock (2) of step (I) or the pre-treated hydrocarbon feedstock (45) of step (II) or the steam-adjusted feedstock (4) of step (III), said step of pre-heating (8) comprising an indirect heat-exchange between said hydrocarbon feedstock (2) or pre-treated hydrocarbon feedstock (45) or steam-adjusted feedstock (4) and said pre-reformed stream (6); preferably a pre-heating temperature of the hydrocarbon feedstock (2) or of the pre-treated hydrocarbon feedstock (45) or of the steam-adjusted feedstock (4) being comprised from 420 °C to 490 °C.

7. The process according to any of the previous claims, further comprising - before step (V) - a step of pre-heating (9) of the steam-adjusted stream (7) of step (IV), said step of pre-heating (9) comprising an indirect heat-exchange between said steam-adjusted stream (7) and said pre-reformed stream (6'); preferably a pre-heating temperature of the steam-adjusted stream (7) being comprised from 100 °C to 450 °C.

8. The process according to any of the previous claims, wherein step (VII) comprises one or more of the following: a water gas shift conversion step (11), and/or a carbon dioxide removal step (12), and/or a hydrogen purification step (13);
preferably said hydrogen-containing product (20):
- having a high-purity of more than 95%, preferably of more than 99%, more preferably of more than 99.9%, even more preferably of more than 99.999%; or
- comprising a hydrogen (H₂) to carbon monoxide (CO) molar ratio - H₂/CO ratio - substantially of 1 or 2;
more preferably wherein step (VII) comprises, in sequence:
- a water gas shift conversion step (11), a carbon dioxide removal step (12), and a hydrogen purification step (13); or
- a water gas shift conversion step (11) and a hydrogen purification step (13), said hydrogen purification step comprising a pressure swing adsorption step and a cryogenic carbon dioxide (CO₂) separation step.

9. The process according to any of the previous claims, further comprising feeding of said hydrogen-containing product (20) to an ammonia or methanol synthesis section, to a Fischer-Tropsch synthesis reactor, to a carbonylation or hydroformylation synthesis reactor, or to a monoethylene glycol synthesis process.

10. A plant (1) for the production of a raw synthesis gas (10) or of a hydrogen-containing product (20), preferably said plant (1) implementing the process according to any of the previous claims, said plant comprising:
(I) a hydrocarbon feedstock feed line for feeding a hydrocarbon feedstock (2) comprising one or more heavy hydrocarbon(s);
(II) an optional pre-treatment section (41) of said hydrocarbon feedstock (2), said pre-treatment section (41) comprising a hydrogenation unit of any unsaturated heavy hydrocarbon(s) and/or a purification unit of any catalyst poison contained in said hydrocarbon feedstock (2) to obtain a pre-treated hydrocarbon feedstock (45);
(III) a steam line arranged for mixing steam (3) to the hydrocarbon feedstock (2) or to the pre-treated hydrocarbon feedstock (45), and hence for adjusting a steam to carbon (S/C) ratio thereof, thereby obtaining a steam-adjusted feedstock (4);
(IV) a pre-reforming reactor (5) of the steam-adjusted feedstock (4) to obtain a pre-reformed stream (6, 6', 6") containing methane produced by reforming of said heavy hydrocarbon(s);
(V) a de-saturator column (14) or a cooler-separator device (23, 24) of said pre-reformed stream (6, 6', 6") arranged for adjusting a steam to carbon (S/C) ratio of said pre-reformed stream (6, 6', 6") and thereby obtaining a steam-adjusted stream (7);
(VI) a partial oxidation (POx) reactor (15) arranged for partially oxidizing the steam-adjusted stream (7) in presence of pure oxygen or oxygen-enriched air (22) to obtain said raw synthesis gas (10);
(VII) optionally a post-treatment section (11, 12, 13) of the raw synthesis gas (10) arranged for post-treating said raw synthesis gas (10) to obtain said hydrogen-containing product (20).

11. The plant according to claim 10, wherein said de-saturator column (14) or said cooler-separator device (23, 24) is arranged for receiving at least 90%, preferably at least 95%, more preferably at least 98%, even more preferably 100%, of said pre-reformed stream (6, 6', 6").

12. The plant according to any of claims 10-11, further comprising:
- a feed-effluent (F-E) heat exchanger (8), e.g., a plate-and-frame F-E heat exchanger, arranged for pre-heating the hydrocarbon feedstock (2), or the pre-treated hydrocarbon feedstock (45), or the steam-adjusted feedstock (4) by indirect heat-exchange with said pre-reformed stream (6); and/or
- an indirect heat exchanger (9), e.g., a plate-and-frame heat exchanger, arranged for pre-heating the steam-adjusted stream (7) by indirect heat-exchange with said pre-reformed stream (6').

13. The plant according to any of claims 10-12, further comprising a start-up heater (16) of the steam-adjusted feedstock (4), said start-up heater (16) being arranged upstream of the pre-reforming reactor (5) and being electrically powered.

14. The plant according to any of claims 10-13, further comprising a saturator column (17) fluidically connected to said de-saturator column (14) so that:
- at least part (18) of a condensed aqueous phase (28) recovered from the de-saturator column (14) is contacted with the hydrocarbon feedstock (2) within said saturator column (17) for producing a water-saturated hydrocarbon feedstock (21); and/or
- at least part (25) of a saturator bottom liquid (39) recovered from the saturator column (17) is contacted with the pre-reformed stream (6") within said de-saturator column (14) for producing said steam-adjusted stream (7);
preferably said plant further comprising an indirect heat exchanger (26) arranged for pre-heating said part (18) of the condensed aqueous phase (28) recovered from the de-saturator column (14) by indirect heat-exchange with said pre-reformed stream (6').

15. The plant according to any of claims 10-13, comprising a saturator column (17) wherein an aqueous phase is contacted with the hydrocarbon feedstock (2) for producing a water-saturated hydrocarbon feedstock (21), and further comprising a line for feeding an aqueous liquid to the de-saturator column (14), so that the aqueous liquid is contacted with the pre-reformed stream (6") in the de-saturator column (14) for producing said steam-adjusted stream (7);
wherein said saturator column (17) is fluidically, and preferably thermally, independent from said de-saturator column (14);
preferably said plant further comprising an indirect heat exchanger arranged for pre-heating said aqueous phase by indirect heat-exchange with said pre-reformed stream (6').

16. The plant according to any of claims 10-15, wherein said post-treatment section (11, 12, 13) comprises, in sequence:
- a water gas shift conversion unit (11), a carbon dioxide removal unit (12), and a hydrogen purification section (13); or
- a water gas shift conversion unit (11) and a hydrogen purification section (13), said hydrogen purification section comprising a pressure swing adsorption unit and a cryogenic carbon dioxide (CO₂) separation unit.
